(19) Europäisches Patentamt
European Patent Office
Office européen des brevets

(11) **EP 2 930 973 A1**

(12) **EUROPEAN PATENT APPLICATION**
published in accordance with Art. 153(4) EPC

(43) Date of publication:
**14.10.2015 Bulletin 2015/42**

(51) Int Cl.:
***H04W 28/16*** (2009.01)

(21) Application number: **12889655.2**

(22) Date of filing: **06.12.2012**

(86) International application number:
**PCT/CN2012/086040**

(87) International publication number:
**WO 2014/086022 (12.06.2014 Gazette 2014/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
• **FAN, Shuju**
  **Shenzhen**
  **Guangdong 518129 (CN)**
• **MA, Xueli**
  **Shenzhen**
  **Guangdong 518129 (CN)**

(74) Representative: **Epping - Hermann - Fischer**
**Patentanwaltsgesellschaft mbH**
**Schloßschmidstraße 5**
**80639 München (DE)**

(54) **USER EQUIPMENT, BASE STATION AND METHOD FOR INFORMATION TRANSMISSION**

(57) The present invention discloses a user equipment, base station and method for information transmission. The method includes the following steps: receiving user data and a pilot signal of a first system sent by a first base station; generating feedback information according to the user data and the pilot signal, and sending the feedback information to a second base station through an uplink control channel of a second system. By means of the above-mentioned manner, in the present invention, the feedback information of the first system may be transmitted by the second system, in order to reduce power consumption and improve user experience.

the first base station 1 sends the user data and the pilot signal of the first system to the user equipment

111

the user equipment receives the user data and the pilot signal, generates the feedback information according to the user data and the pilot signal and sends the feedback information to the second base station through the uplink control channel of the second system

112

Fig. 11

**Description**

FIELD OF THE INVENTION

The present invention relates to the field of communications technologies, and particularly, to a user equipment, base station and method for information transmission.

BACKGROUND OF THE INVENTION

Currently, a UMTS (Universal Mobile Telecommunications System, universal mobile telecommunications system) is one of global 3G standards appointed by the International Organization for Standardization 3GPP (3rd Generation Partnership Project, 3rd generation partnership project). The UMTS has a wide coverage of data transmission, but a lower transmission speed than that of an LTE (Long Term Evolution, long term evolution) system of a quasi-4G standard.
The LTE system is a transition between a 3G technology and a 4G technology and is a 3.9G global standard. The LTE system has a high transmission speed of data, but a small coverage. In the prior art, a base station supports an HSPA (High-Speed Packet Access, high-speed packet access) system of the UMTS and a LTE system to perform downlink data transmission. However, when the base station simultaneously performs uplink data transmission through the HSPA system of the UMTS and the LTE system, power consumption of the base station is high.

SUMMARY OF THE INVENTION

In view of this, embodiments of the present invention provide a user equipment, base station and method for information transmission, in order to solve a problem that the base station simultaneously performs uplink data transmission through the HSPA system of the UMTS and the LTE system, thus resulting in high power consumption.
In a first aspect, a method for information transmission is provided, including: receiving user data and a pilot signal of a first system sent by a first base station; generating feedback information according to the user data and the pilot signal, and sending the feedback information to a second base station through an uplink control channel of a second system.
In combination with the implementation manner of the first aspect, in a first possible implementation manner, the first base station is a long term evolution LTE base station, the second base station is a high-speed packet access HSPA base station, the first system is an LTE system, and the second system is an HSPA system.
In combination with the first possible implementation manner of the first aspect, in a second possible implementation manner, each subframe of the feedback information includes hybrid automatic repeat request acknowledgment HARQ-ACK information and/or channel quality indicator CQI information, being sent to the second base station through a high-speed dedicated physical control channel HS-DPCCH channel of the HSPA system.
In combination with the second possible implementation manner of the first aspect, in a third possible implementation manner, the being sent to the second base station through the HS-DPCCH channel of the HSPA system, includes: mapping the HARQ-ACK information and/or the CQI information onto the HS-DPCCH channel.
In combination with the third possible implementation manner of the first aspect, in a fourth possible implementation manner, the mapping the HARQ-ACK information and/or the CQI information onto the HS-DPCCH channel, includes: carrying the HARQ-ACK information on a first time slot of each subframe of the HS-DPCCH channel, wherein the first time slot is used for carrying two pieces of HARQ-ACK information; and/or carrying the CQI information on a second time slot or a third time slot of each subframe of the HS-DPCCH channel.
In combination with the third possible implementation manner of the first aspect, in a fifth possible implementation manner, the mapping the HARQ-ACK information and/or the CQI information onto the HS-DPCCH channel, includes: updating the format of the HS-DPCCH channel, for enabling each subframe of the HS-DPCCH channel to carry the feedback information of two subframes.
In combination with the fourth possible implementation manner or the fifth possible implementation manner of the first aspect, in a sixth possible implementation manner, the mapping the HARQ-ACK information and/or the CQI information onto the HS-DPCCH channel, includes: independently encoding the HARQ-ACK information and the CQI information, and sending the same to the second base station through the HS-DPCCH channel.
In combination with the fifth possible implementation manner of the first aspect, in a seventh possible implementation manner, the mapping the HARQ-ACK information and/or the CQI information onto the HS-DPCCH channel, includes: jointly encoding the HARQ-ACK information and the CQI information, and sending the same to the second base station through the HS-DPCCH channel.
In combination with the second possible implementation manner of the first aspect, in an eighth possible implementation manner, the sending the same to the second base station through the HS-DPCCH channel of the HSPA system, includes: carrying the feedback information on two HS-DPCCH channels, wherein the feedback information of an odd subframe is carried on one HS-DPCCH channel, and the feedback information of an even subframe is carried on the other HS-DPCCH channel.

In a second aspect, a user equipment for information transmission is provided, including: a receiving unit, configured to receive user data and a pilot signal of a first system sent by a first base station; a processing unit, configured to obtain the user data and the pilot signal from the receiving unit and generate feedback information according to the user data and the pilot signal; a sending unit, configured to obtain the feedback information from the processing unit and send the feedback information to a second base station through an uplink control channel of a second system.

In combination with the implementation manner of the second aspect, in a first possible implementation manner, the first base station is an LTE base station, the second base station is an HSPA base station, the first system is an LTE system, and the second system is an HSPA system.

In combination with the first possible implementation manner of the second aspect, in a second possible implementation manner, each subframe of the feedback information includes HARQ-ACK information and/or CQI information, and the sending unit sends the HARQ-ACK information and/or the CQI information to the second base station through an HS-DPCCH channel of the HSPA system.

In combination with the second possible implementation manner of the second aspect, in a third possible implementation manner, the processing unit maps the HARQ-ACK information and/or the CQI information onto the HS-DPCCH channel.

In combination with the third possible implementation manner of the second aspect, in a fourth possible implementation manner, the processing unit carries the HARQ-ACK information on a first time slot of each subframe of the HS-DPCCH channel, and/or the processing unit carries the CQI information on a second time slot or a third time slot of each subframe of the HS-DPCCH channel, wherein the first time slot is used for carrying two pieces of HARQ-ACK information.

In combination with the third possible implementation manner of the second aspect, in a fifth possible implementation manner, the processing unit updates the format of the HS-DPCCH channel, for enabling each subframe of the HS-DPCCH channel to carry the feedback information of two subframes.

In combination with the fourth possible implementation manner or the fifth possible implementation manner of the second aspect, in a sixth possible implementation manner, the processing unit independently encodes the HARQ-ACK information and the CQI information, and the sending unit sends the code of the HARQ-ACK information and the code of the CQI information to the second base station through the HS-DPCCH channel.

In combination with the fifth possible implementation manner of the second aspect, in a seventh possible implementation manner, the processing unit jointly encodes the HARQ-ACK information and the CQI information, and the sending unit sends the joint code of the HARQ-ACK information and the CQI information to the second base station through the HS-DPCCH channel.

In combination with the second possible implementation manner of the second aspect, in an eighth possible implementation manner, the processing unit carries the feedback information on two HS-DPCCH channels, wherein the feedback information of an odd subframe is carried on one HS-DPCCH channel, and the feedback information of an even subframe is carried on the other HS-DPCCH channel.

In a third aspect, a method for information transmission is provided, including the following steps: receiving feedback information generated by user equipment according to user data and a pilot signal of a first system through an uplink control channel of a second system; sending the feedback information to a first base station.

In combination with the implementation manner of the third aspect, in a first possible implementation manner, the first base station is an LTE base station, the first system is an LTE system, and the second system is an HSPA system.

In combination with the first possible implementation manner of the third aspect, in a second possible implementation manner, each subframe of the feedback information includes HARQ-ACK information and/or CQI information, and the HARQ-ACK information and/or the CQI information is received through an HS-DPCCH channel of the HSPA system.

In a fourth aspect, a base station for information transmission is provided, including: a receiving unit, configured to receive feedback information generated by user equipment according to user data and a pilot signal of a first system through an uplink control channel of a second system; a sending unit, configured to send the feedback information to a first base station.

In combination with the implementation manner of the fourth aspect, in a first possible implementation manner, the first base station is an LTE base station, the first system is an LTE system, and the second system is an HSPA system.

In combination with the first possible implementation manner of the fourth aspect, in a second possible implementation manner, each subframe of the feedback information includes HARQ-ACK information and/or CQI information, and the receiving unit receives the HARQ-ACK information and/or the CQI information through an HS-DPCCH channel of the HSPA system.

By means of the above-mentioned solutions, the beneficial effects of the present invention are as follows: in the present invention, the user equipment generates the feedback information according to the user data and the pilot signal of the first system sent by the first base station, and sends the feedback information to the second base station through the uplink control channel of the second system, to realize that the feedback information of the first system transmits through the second system, so as to reduce power consumption and improve user experience.

BRIEF DESCRIPTION OF THE DRAWINGS

To illustrate technical solutions in the embodiments of the present invention more clearly, a brief introduction on the accompanying drawings which are needed in the description of the embodiments is given below. Apparently, the accompanying drawings in the description below are merely some of the embodiments of the present invention, based on which other drawings may be obtained by those skilled in the art without any creative effort, wherein:

Fig. 1 is a schematic diagram of a structure of a system for information transmission according to a first embodiment of the present invention;
Fig. 2 is a schematic diagram of a structure of user equipment in a system for information transmission according to a second embodiment of the present invention;
Fig. 3 is a schematic diagram of a structure of a second base station in a system for information transmission according to the second embodiment of the present invention;
Fig. 4 is a schematic diagram of a frame structure of an HS-DPCCH channel in a system for information transmission according to the second embodiment of the present invention;
Fig. 5 is a schematic diagram of a frame structure of feedback information in a system for information transmission according to the second embodiment of the present invention;
Fig. 6 is a schematic diagram of mapping feedback information onto an HS-DPCCH channel in a system for information transmission according to the second embodiment of the present invention;
Fig. 7 is a schematic diagram of a frame structure of an HS-DPCCH channel in a system for information transmission according to a third embodiment of the present invention;
Fig. 8 is a schematic diagram of mapping feedback information onto an HS-DPCCH channel in a system for information transmission according to the third embodiment of the present invention;
Fig. 9 is a schematic diagram of mapping feedback information onto an HS-DPCCH channel in a system for information transmission according to a fourth embodiment of the present invention;
Fig. 10 is a schematic diagram of mapping feedback information onto an HS-DPCCH channel in a system for information transmission according to a fifth embodiment of the present invention;
Fig. 11 is a flow chart of a method for information transmission according to the first embodiment of the present invention;
Fig. 12 is a schematic diagram of a structure of user equipment according to a sixth embodiment of the present invention;
Fig. 13 is a schematic diagram of a structure of user equipment according to a seventh embodiment of the present invention;
Fig. 14 is a schematic diagram of a structure of a base station according to an eighth embodiment of the present invention;
Fig. 15 is a schematic diagram of a structure of a base station according to a ninth embodiment of the present invention.

DETAILED DESCRIPTION OF THE EMBODIMENTS

A clear and complete description of technical solutions in the embodiments of the present invention will be given below in combination with the accompanying drawings in the embodiments of the present invention. Apparently, the embodiments described are merely a part, but not all, of the embodiments of the present invention. All of other embodiments, obtained by those skilled in the art based on the embodiments of the present invention without any creative effort, fall into the protection scope of the present invention.

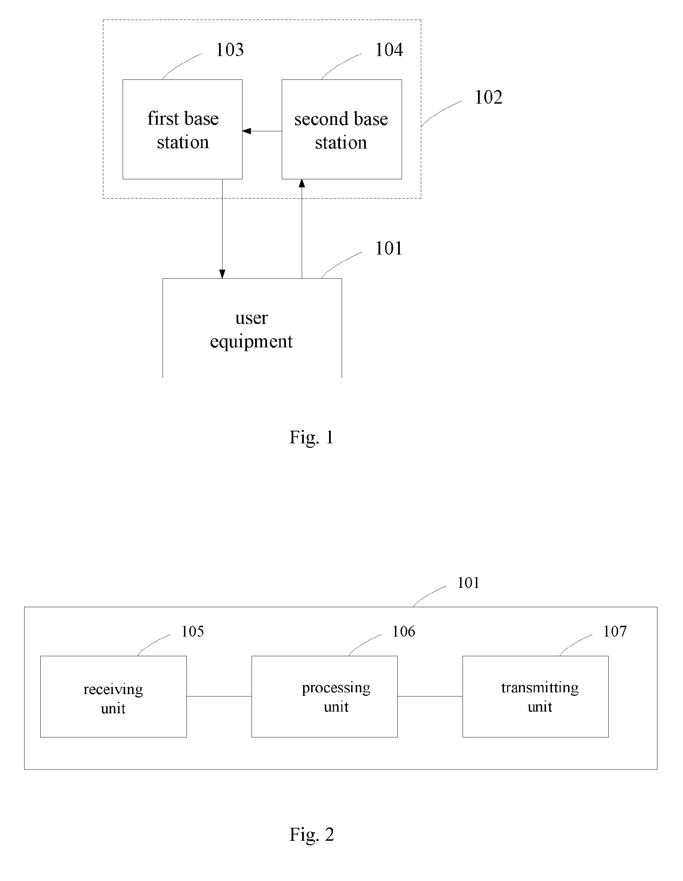

Referring to Fig. 1, Fig. 1 is a schematic diagram of a structure of a system for information transmission according to a first embodiment of the present invention. As shown in Fig. 1, the system disclosed in this embodiment includes: a user equipment (User Equipment, UE) 101 and base stations 102, wherein, the base stations 102 include a first base station 103 and a second base station 104.

In this embodiment, the first base station 103 sends user data and a pilot signal of a first system to the user equipment 101, and the user equipment 101 generates feedback information according to the user data and the pilot signal. The user equipment 101 further sends the feedback information to the second base station 104 through an uplink control channel of a second system, and the second base station 104 sends the feedback information to the first base station 103, to realize the transmission of the feedback information of the first system through the second system, so as to reduce power consumption and improve user experience.

Optionally, the first base station 103 disclosed in this embedment is an LTE base station, the second base station 104 is an HSPA base station, the first system is an LTE system, and the second system is an HSPA system.

The present invention further provides a system for information transmission according to a second embodiment, which is described in detail on the basis of the system for information transmission disclosed in the first embodiment. In this embodiment, the user equipment 101 includes a receiving unit 105, a processing 106 and a sending unit 107, as shown in Fig. 2, the receiving unit 105 is configured to receive the user data and the pilot signal of the first system sent by the first base station 103, the processing unit 106 is configured to obtain the user data and the pilot signal from the receiving unit 105 and generate feedback information according to the user data and the pilot signal, and the sending unit 107 is configured to obtain the feedback information from the processing unit 106 and send the feedback information to the second base station 104 through the uplink control channel of the second system.

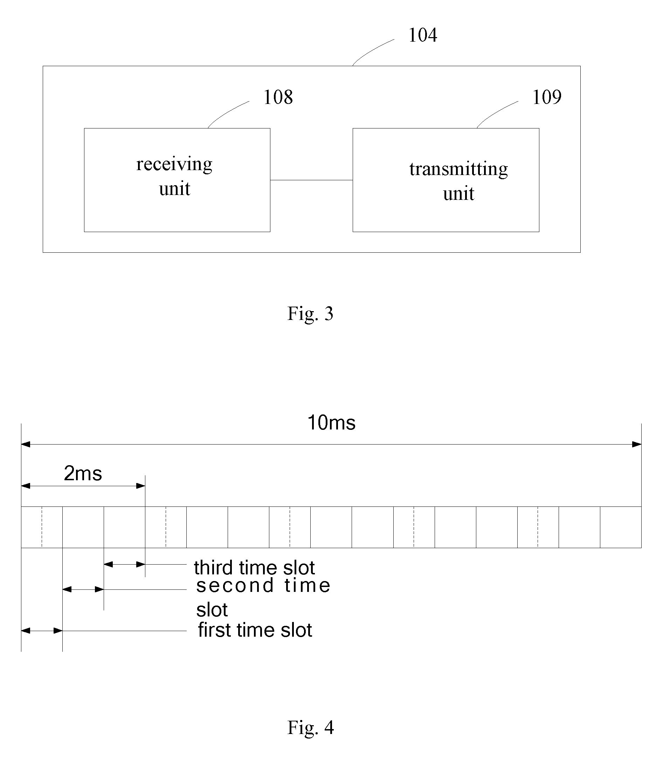

In this embodiment, the second base station 104 includes a receiving unit 108 and a sending unit 109, as shown in Fig. 3, wherein, the receiving unit 108 is configured to receive the feedback information from the sending unit 107 of the user equipment 101, and the sending unit 109 is configured to obtain the feedback information from the receiving unit 108 and send the feedback information to the first base station 103.

In this embodiment, the second system is an HSPA system, and the uplink control channel of the HSPA system is an HS-DPCCH channel (High-Speed Dedicated Physical Control Channel, high-speed dedicated physical control channel). As shown in Fig. 4, a spreading factor of the HS-DPCCH channel is 128, each frame of the HS-DPCCH channel is 10 ms, each frame of the HS-DPCCH channel includes 5 subframes, and each subframe is 2m s, wherein, each subframe of the HS-DPCCH channel includes a first time slot, a second time slot and a third time slot, and the first time slot includes two "half-time-slots".

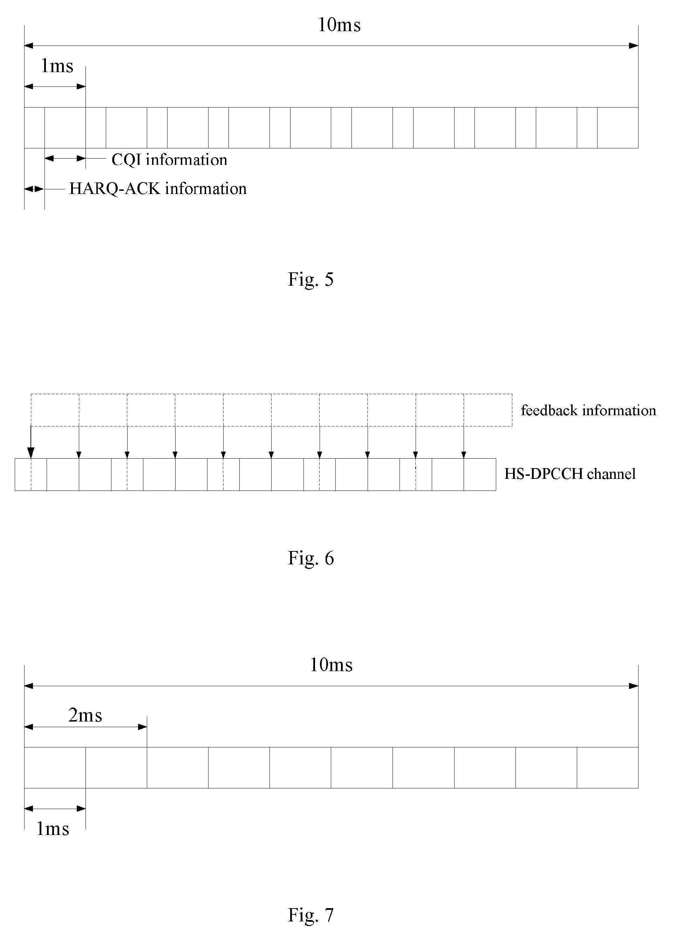

The processing unit 106 of the user equipment 101 generates the feedback information according to the user data and the pilot signal, as shown in Fig. 5, each frame of the feedback information is 10 ms, each frame of the feedback information includes 10 subframes, and each subframe is 1 ms, wherein, each subframe of the feedback information includes HARQ (Hybrid Automatic Repeat Request, hybrid automatic repeat request)-ACK (Acknowledgement, acknowledgement) and/or CQI (Channel Quality Indicator, channel quality indicator) information. In other embodiments of the present invention, those skilled in the art may completely set that the feedback information further includes PCI (Precoding Control Indicator, precoding control indicator) information and/or RI (Rank Indicator, rank indicator) information, and the like.

In this embodiment, the processing unit 106 maps the HARQ-ACK information and/or the CQI information onto the HS-DPCCH channel, namely, the processing unit 106 carries the HARQ-ACK information on the first time slot of each subframe of the HS-DPCCH channel, and/or carries the CQI information on the second time slot or the third time slot of each subframe of the HS-DPCCH channel, for completely carrying the HARQ-ACK information and/or the CQI information of the feedback information on the HS-DPCCH channel, as shown in Fig. 6. The first time slot of the HS-DPCCH channel is used for carrying two pieces of HARQ-ACK information, and the processing unit 106 independently encodes the HARQ-ACK information and the CQI information to obtain the code of the HARQ-ACK information and the code of the CQI information.

In this embodiment, the sending unit 107 sends the code of the HARQ-ACK information of the feedback information and the code of the CQI information of the feedback information to the second base station 104 through the HS-DPCCH channel, and when the second base station 104 receives the feedback information, the second base station 104 needs to separately process the two pieces of HARQ-ACK information carried on the first time slot, in order to avoid that the second base station 104 obtains no HARQ-ACK information within an appointed duration due to time delay.

In this embodiment, the user equipment 101 carries the HARQ-ACK information on the first time slot of each subframe of the HS-DPCCH channel, and/or carries the CQI information on the second time slot or the third time slot of each subframe of the HS-DPCCH channel, to realize that the feedback information transmits to the second base station 102 through the HS-DPCCH channel, so as to reduce power consumption and improve user experience.

The present invention further provides a system for information transmission according to a third embodiment, and the difference between it and a system for information transmission disclosed in the second embodiment lies in that: as shown in Fig. 7, the processing unit 106 maps the HARQ-ACK information and/or the CQI information onto the HS-DPCCH channel. The processing unit 106 updates the format of the HS-DPCCH channel, each subframe of the HS-DPCCH channel includes two time slots, and each time slot is 1 ms, and thus, each subframe of the HS-DPCCH channel may carry the feedback information of two subframes.

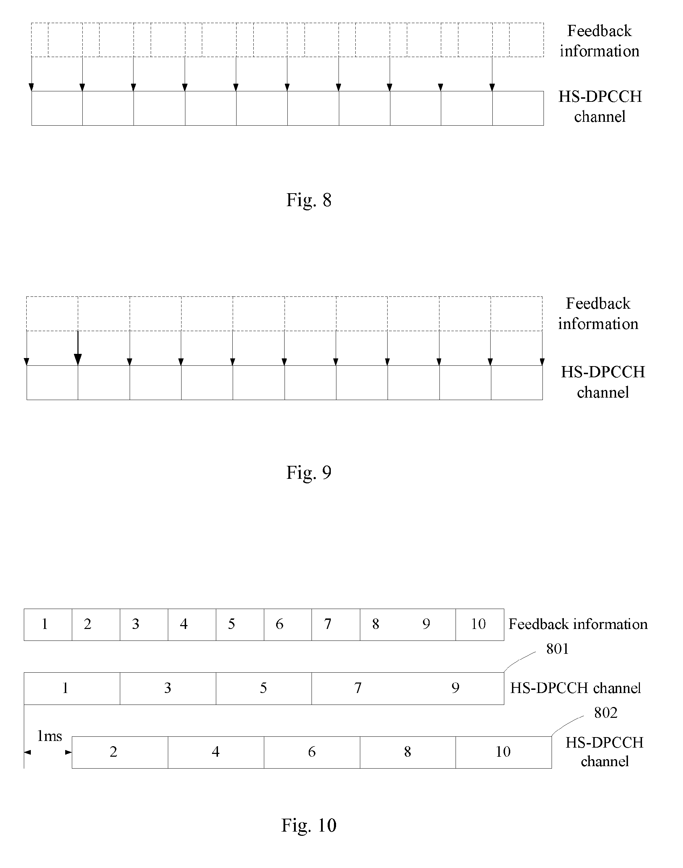

Referring to Fig. 8, Fig. 8 is a diagram of mapping the feedback information onto an HS-DPCCH channel of the system for information transmission according to the third embodiment of the present invention. As shown in Fig. 8, the HARQ-ACK information and/or the CQI information is carried on one time slot of the HS-DPCCH channel, each frame of the feedback information is corresponding to each frame of the HS-DPCCH channel, and the processing unit 106 independently encodes the HARQ-ACK information and the CQI information.

The present invention further provides a system for information transmission according to a fourth embodiment, and the difference between it and the system for information transmission disclosed in the third embodiment lies in that:

as shown in Fig. 9, the processing unit 106 jointly encodes the HARQ-ACK information and the CQI information of the feedback information. How the processing unit 106 jointly encodes the HARQ-ACK information and the CQI information is described below in detail by an example.

In this embodiment, with the feedback information of 1 ms as an example, each 1 ms of the feedback information includes: 2 bits of HARQ-ACK information and 8 bits of CQI information, and the 10 bits are expressed by $\alpha_0$, $\alpha_1$, $\alpha_2$, $\alpha_3$, $\alpha_4$, $\alpha_5$, $\alpha_6$, $\alpha_7$, $\alpha_8$, $\alpha_9$, $\alpha_0$ is a low order, and $\alpha_9$ is a high order, wherein:

$$\begin{pmatrix} a_0 & a_1 & a_2 & a_3 & a_4 & a_5 & a_6 & a_7 & a_8 & a_9 \end{pmatrix} = \begin{pmatrix} ack_0, ack_1, cqi_0 \ cqi_1 \ cqi_2 \ cqi_3 \ cqi_4 \ cqi_5 \ cqi_6 \ cqi_7 \end{pmatrix};$$

$b_0$, $b_1$, $b_2$,......$b_{28}$, $b_{29}$ refers to a bit sequence after the HARQ-ACK information and the CQI information are jointly encoded, and then the relationship is as follows:

$$b_i = \sum_{n=0}^{A-1} \left( a_n \cdot M_{i,n} \right) \mod 2 \quad , \ i = 0,1,2,3\cdots\cdots, \ B-1;$$

wherein, A=10, B=30, $M_{i,n}$ may be obtained by looking up table 1, and table 1 is an encoding base sequence.

In other embodiments of the present invention, those skilled in the art may set that each 1 ms of the feedback information includes HARQ-ACK information and CQI information which have other bits. In addition, in other embodiments, those skilled in the art may set that the feedback information further includes PCI information and/or RI information, and the like, and may be jointly encoded by means of the above-mentioned joint encoding method.

The present invention further provides a system for information transmission according to a fifth embodiment, and the difference between it and the system for information transmission disclosed in the second embodiment lies in that: as shown in Fig. 10, the spreading factor of the HS-DPCCH channel of the second system disclosed in this embodiment is 256, the processing unit 106 carries the feedback information on two HS-DPCCH channels 801 and 802, wherein the processing unit 106 carries the feedback information of an odd subframe on the HS-DPCCH channel 801 and carries the feedback information of an even subframe on the HS-DPCCH channel 802, and the HS-DPCCH channel 802 delays for 1 ms relative to the HS-DPCCH channel 801.

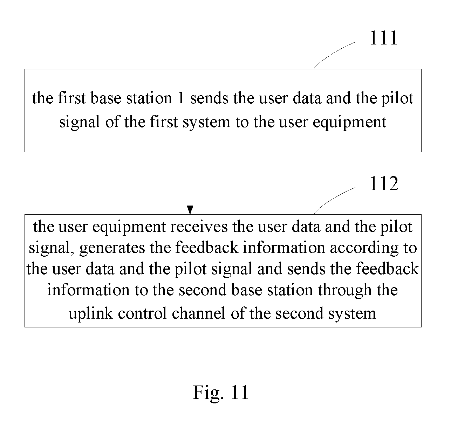

The present invention further provides a method for information transmission according to the first embodiment, which is described in detail on the basis of the system for information transmission disclosed in the first embodiment. As shown in Fig. 11, the method disclosed in this embodiment includes the following steps:

step 111: the first base station 103 sends the user data and the pilot signal of the first system to the user equipment 101; the first base station 103 sends the user data and the pilot signal to the user equipment 101 and sends control information related to the user data and the pilot signal simultaneously.

Step 112: the user equipment 101 receives the user data and the pilot signal, generates the feedback information according to the user data and the pilot signal and sends the feedback information to the second base station 104 through the uplink control channel of the second system;
after the user equipment 101 receives the control information, the user equipment 101 adjusts and decodes the user data and the pilot signal through the control information, and the user equipment 101 generates the feedback information according to the user data and the pilot signal. The user equipment 101 further sends the feedback information to the second base station 104 through the uplink control channel of the second system, and the second base station 104 sends the feedback information to the first base station 103, in order to realize that the feedback information of the first system transmits through the second system.

Table 1 encoding base sequence

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ |
|---|---|---|---|---|---|---|---|---|---|---|
| 0 | 1 | 0 | 0 | 0 | 0 | 1 | 0 | 0 | 0 | 0 |
| 1 | 0 | 1 | 0 | 0 | 0 | 1 | 1 | 0 | 0 | 0 |
| 2 | 1 | 1 | 0 | 0 | 0 | 1 | 0 | 0 | 0 | 1 |
| 3 | 0 | 0 | 1 | 0 | 0 | 1 | 1 | 0 | 1 | 1 |

(continued)

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ |
|---|---|---|---|---|---|---|---|---|---|---|
| 4 | 1 | 0 | 1 | 0 | 0 | 1 | 0 | 0 | 0 | 1 |
| 5 | 0 | 1 | 1 | 0 | 0 | 1 | 0 | 0 | 1 | 0 |
| 6 | 1 | 1 | 1 | 0 | 0 | 1 | 0 | 1 | 0 | 0 |
| 7 | 0 | 0 | 0 | 1 | 0 | 1 | 0 | 1 | 1 | 0 |
| 8 | 1 | 0 | 0 | 1 | 0 | 1 | 1 | 1 | 1 | 0 |
| 9 | 0 | 1 | 0 | 1 | 0 | 1 | 1 | 0 | 1 | 1 |
| 10 | 1 | 1 | 0 | 1 | 0 | 1 | 0 | 0 | 1 | 1 |
| 11 | 0 | 0 | 1 | 1 | 0 | 1 | 0 | 1 | 1 | 0 |
| 12 | 1 | 0 | 1 | 1 | 0 | 1 | 0 | 1 | 0 | 1 |
| 13 | 0 | 1 | 1 | 1 | 0 | 1 | 1 | 0 | 0 | 1 |
| 14 | 1 | 1 | 1 | 1 | 0 | 1 | 1 | 1 | 1 | 1 |
| 15 | 1 | 0 | 0 | 0 | 1 | 1 | 1 | 1 | 0 | 0 |
| 16 | 0 | 1 | 0 | 0 | 1 | 1 | 1 | 1 | 0 | 1 |
| 17 | 1 | 1 | 0 | 0 | 1 | 1 | 1 | 0 | 1 | 0 |
| 18 | 0 | 0 | 1 | 0 | 1 | 1 | 0 | 1 | 1 | 1 |
| 19 | 1 | 0 | 1 | 0 | 1 | 1 | 0 | 1 | 0 | 1 |
| 20 | 0 | 1 | 1 | 0 | 1 | 1 | 0 | 0 | 1 | 1 |
| 21 | 1 | 1 | 1 | 0 | 1 | 1 | 0 | 1 | 1 | 1 |
| 22 | 0 | 0 | 0 | 1 | 1 | 1 | 0 | 1 | 0 | 0 |
| 23 | 1 | 0 | 0 | 1 | 1 | 1 | 1 | 1 | 0 | 1 |
| 24 | 0 | 1 | 0 | 1 | 1 | 1 | 1 | 0 | 1 | 0 |
| 25 | 1 | 1 | 0 | 1 | 1 | 1 | 1 | 0 | 0 | 1 |
| 26 | 0 | 0 | 1 | 1 | 1 | 1 | 0 | 0 | 1 | 0 |
| 27 | 1 | 0 | 1 | 1 | 1 | 1 | 1 | 1 | 0 | 0 |
| 28 | 0 | 1 | 1 | 1 | 1 | 1 | 1 | 1 | 1 | 0 |
| 29 | 1 | 1 | 1 | 1 | 1 | 1 | 1 | 1 | 1 | 1 |

The present invention further provides a method for information transmission according to the second embodiment, which is described in detail on the basis of the system for information transmission disclosed in the second embodiment. In step 112, the processing unit 106 of the user equipment 101 carries the HARQ-ACK information on a first time slot of each subframe of the HS-DPCCH channel, and/or carries the CQI information on a second time slot or the third time slot of each subframe of the HS-DPCCH channel, for completely carrying the HARQ-ACK information and/or the CQI information of the feedback information on the HS-DPCCH channel, as shown in Fig. 6. The first time slot of the HS-DPCCH channel is used for carrying two pieces of HARQ-ACK information, and the processing unit 106 independently encodes the HARQ-ACK information and the CQI information to obtain the code of the HARQ-ACK information and the code of the CQI information.

The present invention further provides a method for information transmission according to the third embodiment, and the difference between it and the method for information transmission according to the second embodiment lies in that: in step 112, the processing unit 106 updates the format of the HS-DPCCH channel, so that each subframe of the HS-DPCCH channel includes two time slots, and each time slot is 1ms. The processing unit 106 independently encodes the HARQ-ACK information and the CQI information of the feedback information, and carries the HARQ-ACK information and the CQI information on one time slot of the HS-DPCCH channel.

The present invention further provides a method for information transmission according to the fourth embodiment, and the difference between it and the method for information transmission according to the third embodiment lies in that: in step 112, the processing unit 106 jointly encodes the HARQ-ACK information and the CQI information of the feedback information.

The present invention further provides a method for information transmission according to the fifth embodiment, and the difference between it and the method for information transmission disclosed in the second embodiment lies in that: in step 112, the spreading factor of the HS-DPCCH channel of the second system is 256, the processing unit 106 carries the feedback information on two HS-DPCCH channels 801 and 802, wherein the processing unit 106 carries the feedback information of an odd subframe on the HS-DPCCH channel 801 and carries the feedback information of an even subframe on the HS-DPCCH channel 802, and the HS-DPCCH channel 802 delays for 1 ms relative to the HS-DPCCH channel 801.

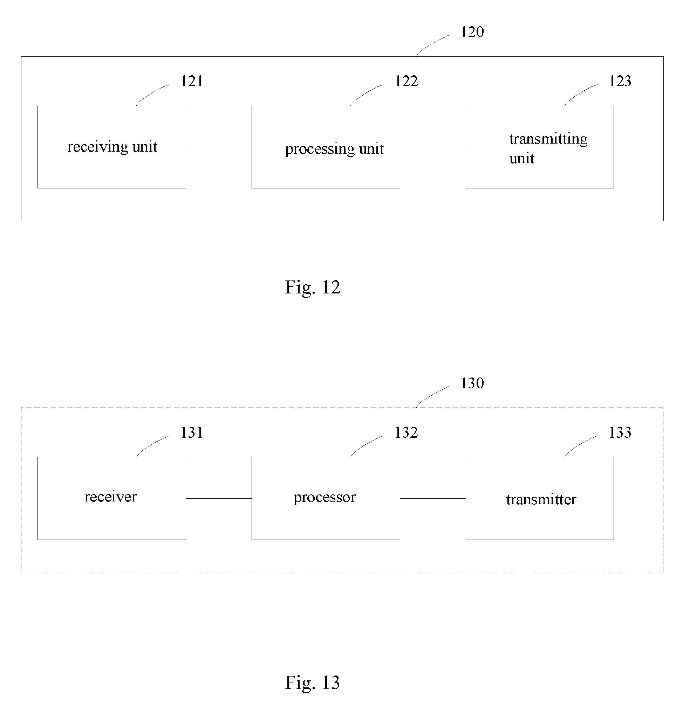

The present invention further provides user equipment according to a sixth embodiment, which is described on the basis of the system for information transmission disclosed in the first embodiment. The user equipment disclosed in this embodiment is used for implementing the method for information transmission in the above-mentioned embodiments. As shown in Fig. 12, the user equipment 120 disclosed in this embodiment includes: a receiving unit 121, a processing unit 122 and a sending unit 123. The receiving unit 121 is configured to receive user data and a pilot signal of the first system sent by the first base station 103, the processing unit 122 is configured to obtain the user data and the pilot signal from the receiving unit 121 and generate feedback information according to the user data and the pilot signal, and the sending unit 123 is configured to obtain the feedback information from the processing unit 122 and send the feedback information to the second base station 104 through the uplink control channel of the second system.

The present invention further provides user equipment according to a seventh embodiment, which is described on the basis of the system for information transmission disclosed in the first embodiment. The user equipment disclosed in this embodiment is used for implementing the method for information transmission in the above-mentioned embodiments. As shown in Fig. 13, the user equipment 130 disclosed in this embodiment includes: a receiver 131, a processor 132 and a transmitter 133, wherein, the receiver 131 is configured to receive user data and a pilot signal of the first system sent by the first base station 103, the processor 132 is configured to obtain the user data and the pilot signal from the receiver 131 and generate feedback information according to the user data and the pilot signal, and the transmitter 133 is configured to obtain the feedback information from the processor 132 and send the feedback information to the second base station 104 through the uplink control channel of the second system.

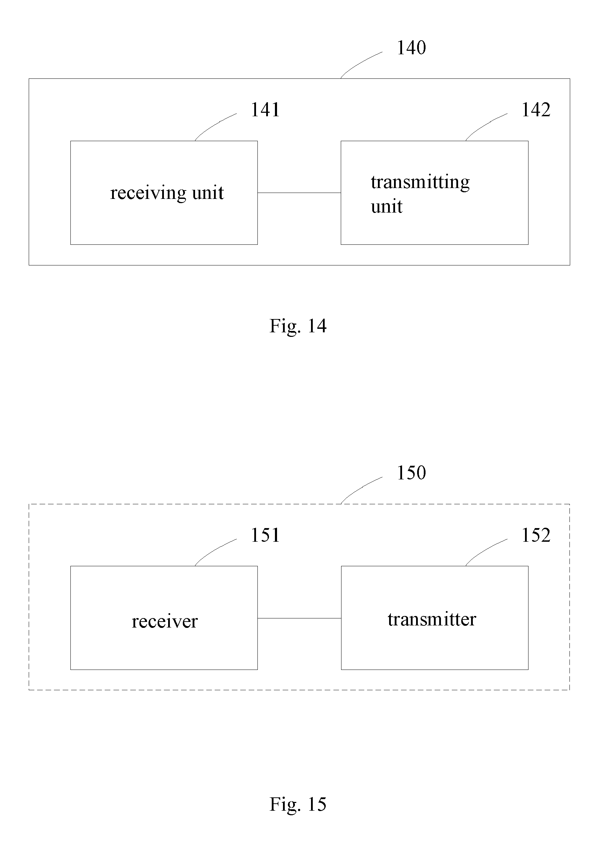

The present invention further provides a base station according to an eighth embodiment, which is described on the basis of the system for information transmission disclosed in the first embodiment. The base station disclosed in this embodiment is used for implementing the method for information transmission in the above-mentioned embodiments. As shown in Fig. 14, the base station 140 disclosed in this embodiment includes a receiving unit 141 and a sending unit 142, wherein, the base station 140 is the second base station 104 disclosed in the system for information transmission according to the first embodiment. The receiving unit 141 is configured to receive a feedback signal, generated by the user equipment 101 according to the user data and the pilot signal of the first system, through the uplink control channel of the second system, and the sending unit 142 is configured to obtain the feedback signal from the receiving unit 141 and send the feedback signal to the first base station 103.

A base station according to a ninth embodiment of the present invention is described on the basis of the system for information transmission disclosed in the first embodiment. The base station disclosed in this embodiment is used for implementing the method for information transmission according to the above-mentioned embodiments. As shown in Fig. 15, the base station 150 disclosed in this embodiment includes a receiver 151 and a transmitter 152, wherein, the base station 150 is the second base station 104 disclosed in the system for information transmission according to the first embodiment. The receiver 151 is configured to receive the feedback signal generated by the user equipment 101 according to the user data and the pilot signal of the first system through the uplink control channel of the second system, and the transmitter 152 is configured to obtain the feedback signal from the receiver 151 and send the feedback signal to the first base station 103.

To sum up, in the present invention, the user equipment generates the feedback information according to the user data and the pilot signal of the first system sent by the first base station, and sends the feedback information to the second base station through the uplink control channel of the second system, to realize the transmission of the feedback information of the first system through the second system, so as to reduce power consumption and improve user experience.

The foregoing descriptions are merely embodiments of the present invention, rather than limiting the patent scope of the present invention. Any equivalent structures or equivalent flow transformations made by means of the description and accompanying drawing contents of the present invention, or direct and indirect applications in other related technical fields are all encompassed in the patent protection scope of the present invention in the same way.

**Claims**

1. A method for information transmission, comprising:

   receiving user data and a pilot signal of a first system sent by a first base station;
   generating feedback information according to the user data and the pilot signal, and sending the feedback information to a second base station through an uplink control channel of a second system.

2. The method of claim 1, wherein the first base station is a long term evolution LTE base station, the second base station is a high-speed packet access HSPA base station, the first system is an LTE system, and the second system is an HSPA system.

3. The method of claim 2, wherein each subframe of the feedback information comprises hybrid automatic repeat request acknowledgment HARQ-ACK information and/or channel quality indicator CQI information,
   sending the HARQ-ACK information and/or the CQI information to the second base station through a high-speed dedicated physical control channel HS-DPCCH channel of the HSPA system.

4. The method of claim 3, wherein the sending the HARQ-ACK information and/or the CQI information to the second base station through the HS-DPCCH channel of the HSPA system, comprises:

   mapping the HARQ-ACK information and/or the CQI information onto the HS-DPCCH channel.

5. The method of claim 4, wherein the mapping the HARQ-ACK information and/or the CQI information onto the HS-DPCCH channel, comprises:

   carrying the HARQ-ACK information on a first time slot of each subframe of the HS-DPCCH channel, wherein the first time slot is used for carrying two pieces of HARQ-ACK information;
   and/or carrying the CQI information on a second time slot or a third time slot of each subframe of the HS-DPCCH channel.

6. The method of claim 4, wherein the mapping the HARQ-ACK information and/or the CQI information onto the HS-DPCCH channel, comprises:

   updating the format of the HS-DPCCH channel, for enabling each subframe of the HS-DPCCH channel to carry the feedback information of two subframes.

7. The method of claim 5 or 6, wherein the mapping the HARQ-ACK information and/or the CQI information onto the HS-DPCCH channel, comprises:

   independently encoding the HARQ-ACK information and the CQI information, and sending joint code of the HARQ-ACK information and the CQI information to the second base station through the HS-DPCCH channel.

8. The method of claim 6, wherein the mapping the HARQ-ACK information and/or the CQI information onto the HS-DPCCH channel, comprises:

   jointly encoding the HARQ-ACK information and the CQI information, and sending the code of HARQ-ACK information and the code of CQI information to the second base station through the HS-DPCCH channel.

9. The method of claim 3, wherein the sending the HARQ-ACK information and/or the CQI information to the second base station through the HS-DPCCH channel of the HSPA system, comprises:

   carrying the feedback information on two HS-DPCCH channels, wherein the feedback information of an odd subframe is carried on one HS-DPCCH channel, and the feedback information of an even subframe is carried on the other HS-DPCCH channel.

10. A user equipment for information transmission, comprising:

    a receiving unit, configured to receive user data and a pilot signal of a first system sent by a first base station;

a processing unit, configured to obtain the user data and the pilot signal from the receiving unit and generate feedback information according to the user data and the pilot signal;

a transmitting unit, configured to obtain the feedback information from the processing unit and send the feedback information to a second base station through an uplink control channel of the second system.

11. The user equipment of claim 10, wherein the first base station is an LTE base station, the second base station is an HSPA base station, the first system is an LTE system, and the second system is an HSPA system.

12. The user equipment of claim 11, wherein each subframe of the feedback information comprises HARQ-ACK information and/or CQI information, and the transmitting unit sends the HARQ-ACK information and/or the CQI information to the second base station through an HS-DPCCH channel of the HSPA system.

13. The user equipment of claim 12, wherein the processing unit maps the HARQ-ACK information and/or the CQI information onto the HS-DPCCH channel.

14. The user equipment of claim 13, wherein the processing unit carries the HARQ-ACK information on a first time slot of each subframe of the HS-DPCCH channel, and/or the processing unit carries the CQI information on a second time slot or a third time slot of each subframe of the HS-DPCCH channel, wherein the first time slot is used for carrying two pieces of HARQ-ACK information.

15. The user equipment of claim 13, wherein the processing unit updates the format of the HS-DPCCH channel, for enabling each subframe of the HS-DPCCH channel to carry the feedback information of two subframes.

16. The user equipment of claim 14 or 15, wherein the processing unit independently encodes the HARQ-ACK information and the CQI information, and the transmitting unit sends the code of the HARQ-ACK information and the code of the CQI information to the second base station through the HS-DPCCH channel.

17. The user equipment of claim 15, wherein the processing unit jointly encodes the HARQ-ACK information and the CQI information, and the transmitting unit sends joint code of the HARQ-ACK information and the CQI information to the second base station through the HS-DPCCH channel.

18. The user equipment of claim 12, wherein the processing unit carries the feedback information on two HS-DPCCH channels, wherein the feedback information of an odd subframe is carried on one HS-DPCCH channel, and the feedback information of an even subframe is carried on the other HS-DPCCH channel.

19. A method for information transmission, comprising the following steps:

receiving feedback information generated by user equipment according to user data and a pilot signal of a first system through an uplink control channel of a second system;
sending the feedback information to a first base station.

20. The method of claim 19, wherein the first base station is an LTE base station, the first system is an LTE system, and the second system is an HSPA system.

21. The method of claim 20, wherein each subframe of the feedback information comprises HARQ-ACK information and/or CQI information, and the HARQ-ACK information and/or the CQI information is received through an HS-DPCCH channel of the HSPA system.

22. A base station for information transmission, comprising:

a receiving unit, configured to receive feedback information generated by a user equipment according to user data and a pilot signal of a first system through an uplink control channel of a second system;
a transmitting unit, configured to send the feedback information to a first base station.

23. The base station of claim 22, wherein the first base station is an LTE base station, the first system is an LTE system, and the second system is an HSPA system.

24. The base station of claim 23, wherein each subframe of the feedback information comprises HARQ-ACK information and/or CQI information, and the receiving unit receives the HARQ-ACK information and/or the CQI information through an HS-DPCCH channel of the HSPA system.

Fig. 1

Fig. 2

104

108                                    109

receiving
unit

transmitting
unit

Fig. 3

10ms

2ms

third time slot
second time
slot
first time slot

Fig. 4

10ms

1ms

CQI information

HARQ-ACK information

Fig. 5

feedback information

HS-DPCCH channel

Fig. 6

10ms

2ms

1ms

Fig. 7

Fig. 8

Feedback
information

HS-DPCCH
channel

Fig. 9

Feedback
information

HS-DPCCH
channel

| 1 | 2 | 3 | 4 | 5 | 6 | 7 | 8 | 9 | 10 | Feedback information |

801

| 1 | 3 | 5 | 7 | 9 | HS-DPCCH channel |

802

1ms

| 2 | 4 | 6 | 8 | 10 | HS-DPCCH channel |

Fig. 10

111

the first base station 1 sends the user data and the pilot signal of the first system to the user equipment

112

the user equipment receives the user data and the pilot signal, generates the feedback information according to the user data and the pilot signal and sends the feedback information to the second base station through the uplink control channel of the second system

Fig. 11

120

| receiving unit | processing unit | transmitting unit |
|---|---|---|
| 121 | 122 | 123 |

Fig. 12

130

| receiver | processor | transmitter |
|---|---|---|
| 131 | 132 | 133 |

Fig. 13

140

141 142

receiving unit | transmitting unit

Fig. 14

150

151 152

receiver | transmitter

Fig. 15

# INTERNATIONAL SEARCH REPORT

| | International application No. |
|---|---|
| | PCT/CN2012/086040 |

## A. CLASSIFICATION OF SUBJECT MATTER

H04W 28/16 (2009.01) i

According to International Patent Classification (IPC) or to both national classification and IPC

## B. FIELDS SEARCHED

Minimum documentation searched (classification system followed by classification symbols)

IPC: H04L; H04W

Documentation searched other than minimum documentation to the extent that such documents are included in the fields searched

Electronic data base consulted during the international search (name of data base and, where practicable, search terms used)

CNKI, CNABS, VEN: system, basestation, BS, pilot, feedback, uplink, channel, first, second, CQI, ACK, LTE, HSPA, DPCCH

## C. DOCUMENTS CONSIDERED TO BE RELEVANT

| Category* | Citation of document, with indication, where appropriate, of the relevant passages | Relevant to claim No. |
|---|---|---|
| X | CN 102387525 A (CHINA MOBILE COMM. CORP.) 21 March 2012 (21.03.2012) see claim 1 | 1, 2, 10, 11, 19, 20, 22, 23 |
| A | CN 101465720 A (ZTE CORPORATION) 24 June 2009 (24.06.2009) see the whole document | 1-24 |
| A | CN 101841858 A (DATANG MOBILE COMM EQUIP. CO.) 22 September 2010 (22.09.2010) see the whole document | 1-24 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 September 2013 (02.09.2013) | 19 September 2013 (19.09.2013) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>PAN, Bin<br><br>Telephone No. (86-10) 62412162 |

Form PCT/ISA/210 (second sheet) (July 2009)

## INTERNATIONAL SEARCH REPORT
Information on patent family members

International application No.

PCT/CN2012/086040

| Patent Documents referred in the Report | Publication Date | Patent Family | Publication Date |
|---|---|---|---|
| CN 102387525 A | 21.03.2012 | None | |
| CN 101465720 A | 24.06.2009 | None | |
| CN 101841858 A | 22.09.2010 | None | |

Form PCT/ISA /210 (patent family annex) (July 2009)